# EUROPÄISCHE PATENTSCHRIFT

(11) **EP 2 581 672 B1**
(45) Veröffentlichungstag und Bekanntmachung des Hinweises auf die Patenterteilung: **27.04.2016**
(21) Anmeldenummer: 12178219.7
(22) Anmeldetag: 27.07.2012
(51) Int. Cl.: F24D 3/14

(54) **Verfahren zum Herstellen einer Klimabodenplatte und Klimabodenplatte**
Method for producing an air-conditioning floorplate and air-conditioning floorplate
Procédé de fabrication d'une plaque de fond climatisée et plaque de fond climatisée

(30) Priorität: 12.10.2011 DE 102011115711
(43) Veröffentlichungstag der Anmeldung: 17.04.2013
(73) Patentinhaber: Viega GmbH & Co. KG, 57439 Attendorn (DE)
(72) Erfinder: Pilmeier, Reinhard, 94354 Haselbach (DE); Oischinger, Matthias, 94250 Achslach (DE)
(74) Vertreter: Cohausz & Florack

(56) Entgegenhaltungen:
- EP-A1- 0 011 774
- EP-A1- 1 369 646
- EP-A2- 0 218 108
- EP-A2- 0 947 778
- DE-A1- 2 650 160
- DE-A1- 4 026 412
- DE-A1- 4 445 473

## Beschreibung

Die Erfindung betrifft ein Verfahren zum Herstellen einer Klimabodenplatte, bei dem die folgenden Schritte durchgeführt werden:
- Bereitstellen einer Form mit einem oberen Füllabschnitt und einem in vertikaler Richtung daran angrenzenden unteren Füllabschnitt, der von mindestens einer Vertiefung gebildet wird,
- Befüllen des unteren Füllabschnitts mit einer Füllmasse enthaltend einen Leichtfüllstoff und Bindemittel,
- Befüllen des oberen Füllabschnitts mit einer Füllmasse enthaltend einen Leichtfüllstoff und Bindemittel, wobei sich die Füllmasse im unteren Füllabschnitt mit der Füllmasse im oberen Füllabschnitt verbindet,
- Aushärten des Bindemittels.
Ein entsprechendes Verfahren zum Herstellen einer Klimabodenplatte ist beispielsweise aus der DE 26 50 160 A1 bekannt.

Ferner betrifft die Erfindung eine Klimabodenplatten mit einem unteren plattenförmigen Abschnitt und mit einem in vertikaler Richtung daran angrenzenden und damit verbundenen oberen Abschnitt, der von mindestens einem Vorsprung gebildet wird, wobei der untere Abschnitt und der obere Abschnitt von einer ausgehärteten Füllmasse gebildet ist, die Leichtfüllstoff und Bindemittel enthält. Eine entsprechende Klimabodenplatte ist beispielsweise aus der DE 44 45 473 A1 bekannt.

Aus der EP 1 369 646 A1 ist ferner eine Form zur Herstellung einer Klimabodenplatte mit einem oberen Füllabschnitt und mit einem unteren Füllabschnitt, der von mindestens einer Vertiefung gebildet wird, bekannt, wobei zumindest ein Teil der Form eine Kunststofffolie ist, die zumindest den unteren Füllabschnitt bildet, und wobei die Form oberseitig offen ist.

Es sind Fußbodenheizungssysteme bekannt, die in der Regel wie folgt aufgebaut sind. Auf einen tragfähigen Untergrund, beispielsweise auf einen Betonboden, der mit einer Dämmplatte versehen sein kann, wird eine sogenannte Klimabodenplatte aufgelegt, die als Halterung für Wärmetauscherrohre der Fußbodenheizung dient. Die Wärmetauscherrohre werden dazu in Rohrführungsnuten mäanderförmig auf den Klimabodenplatten verlegt, wobei die Rohrführungsnuten die Rohre so weit fixieren sollen, dass sich diese insbesondere bei der Montage des Fußbodenheizungssystems möglichst nicht verschieben. Die Einheit aus Klimabodenplatte und Wärmetauscherrohren kann anschließend mit Spachtelmasse übergossen oder, unter Verwendung von Fliesenkleber, direkt befliest werden, was beides die Klimabodenplatte und die Rohre in vertikaler Richtung nach oben hin abdeckt. Ein solcher Fußbodenheizungsaufbau mit Klimabodenplatte ist zum Beispiel aus der DE 20 2009 011 156 U1 oder der DE 20 2005 009 253 U1 bekannt.

Klimabodenplatten der zuvor beschriebenen Art lassen sich unterteilen in sogenannte Grundplatten einerseits und sogenannte Kopfplatten andererseits. Die im Weiteren beschriebene Erfindung ist sowohl für Grundplatten als auch für Kopfplatten anwendbar. Die Grundplatten weisen eine Mehrzahl von länglichen, parallel zueinander verlaufenden Nuten auf und nehmen den Großteil der Fläche eines Raums mit Fußbodenheizung ein. Die Kopfplatten sind Klimabodenplatten, die im Randbereich des Raums, der mit der Fußbodenheizung ausgestattet wird, an die Grundplatten angelegt werden und dazu dienen, Abschnitte der Wärmetauscherrohre umzulenken bzw. in einer nichtparallelen Ausrichtung zu verlegen. Dazu weisen die Kopfplatten eine Vielzahl von kreisförmigen, vertikal hervorstehenden noppenförmigen Vorsprüngen (Noppen genannt) auf, wobei zwei am nächsten zueinander benachbarte Noppen jeweils eine Rohrführungsnut zwischen sich ausbilden, derart, dass die beiden zueinander weisenden Seitenwände jeweils benachbarter Noppen die Nutwände und der dazwischen liegende Boden den Nutgrund bildet. Um diese Noppen können die Wärmetauscherrohre in einer 90°-Umlenkung oder einer 180°-Umlenkung herumgeführt werden.

Üblicherweise werden als Klimabodenplatten Gipsfaserplatten verwendet, die bei einer Dicke von beispielsweise 18 mm ein Gewicht von beispielsweise 22 kg/m² aufweisen können. Die Gipsfaserplatten werden zunächst als Rohplatten mit einer ebenen Oberfläche bereitgestellt, in die dann die Nuten für die Rohre aufwendig eingefräst werden müssen. Das Einfräsen bedeutet einen zusätzlichen Arbeitsschritt bei der Fertigung der Klimabodenplatten. Das relativ hohe Gewicht der Klimabodenplatten verursacht entsprechend hohe Transportkosten. Außerdem ist das Gewicht eine Belastung für den Heizungsbauer beim Handhaben der Klimabodenplatten, insbesondere beim Abladen vom Lkw, beim Vertragen der Klimabodenplatten auf der Baustelle und bei der Montage. Die Gipsfaserplatten müssen dann außerdem mit einer Kreissäge mit hartmetallbestücktem Sägeblatt zugeschnitten werden. Aufgrund des Werkstoffes Gips können diese Platten außerdem nicht in Nassräumen eingesetzt werden.

Aus dem Stand der Technik sind auf anderen technischen Gebieten, nämlich als Schallschutz- oder Dämmplatten oder als Träger für Möbeloberflächen, insbesondere Küchenarbeitsplatten, Platten aus Blähglas als Leichtfüllstoff und einer Bindemittelmatrix bekannt. Beispiele sind in der DE 103 26 252 A1, der EP 0 763 506 A1 und der DE 10 2006 048 897 A1 beschrieben. Diese Platten sind aber nicht als Klimabodenplatten für Fußbodenheizungssysteme einsetzbar, allein schon aus dem Grund, dass sich die Wärmetauscherrohre auf solchen Platten nicht ohne weiteres befestigen lassen würden.

Es ist daher die Aufgabe der vorliegenden Erfindung, eine Klimabodenplatte für Fußbodenheizungssysteme herzustellen, die leichter handhabbar ist.

Die zuvor hergeleitete und aufgezeigte Aufgabe wird gemäß einer ersten Lehre der vorliegenden Erfindung durch die Merkmale des kennzeichnenden Teils von Patentanspruch 1 gelöst. Die Aufgabe wird also gelöst durch ein Verfahren zum Herstellen einer Klimabodenplatte, bei dem die folgenden Schritte in der folgenden Reihenfolge, durchgeführt werden:
- Bereitstellen einer Form (Gussform) mit einem oberen Füllabschnitt und einem in vertikaler Richtung daran angrenzenden unteren Füllabschnitt, der von mindestens einer Vertiefung gebildet wird (der obere Füllabschnitt formt später einen plattenförmigen Grundkörper, der untere Füllabschnitt daraus hervorstehende Vorsprünge, insbesondere Noppen, wobei benachbarte Vorsprünge zwischen sich eine Nut ausbilden),
- Befüllen des unteren Füllabschnitts mit einer Füllmasse enthaltend einen Leichtfüllstoff, insbesondere Blähglasgranulat, und Bindemittel (während des Befüllens oder nach dem Befüllen kann die Form gerüttelt bzw. in Vibration versetzt werden, um die Packungsdichte des Leichtfüllstoffs zu erhöhen; gegebenenfalls ist auch ein Pressen der Füllmasse denkbar),
- Befüllen des oberen Füllabschnitts mit einer Füllmasse enthaltend einen Leichtfüllstoff, insbesondere Blähglasgranulat, und Bindemittel, wobei sich die Füllmasse im unteren Füllabschnitt mit der Füllmasse im oberen Füllabschnitt verbindet (während des Befüllens oder nach dem Befüllen kann die Form gerüttelt bzw. in Vibration versetzt werden, um die Packungsdichte des Leichtfüllstoffs zu erhöhen; gegebenenfalls ist auch ein Pressen der Füllmasse denkbar), und
- Aushärten des Bindemittels (durch Abwarten einer bestimmten Zeitspanne, gegebenenfalls auch, indem die Füllmasse aufgewärmt und/oder belüftet wird),
wobei bei dem Schritt des Befüllens des oberen Füllabschnitts die Füllmasse Leichtfüllstoff mit einer durchschnittlichen Korngröße enthält, die kleiner als die durchschnittliche Korngröße des im unteren Füllabschnitt verwendeten Leichtfüllstoffs ist.

Unter dem Begriff "Leichtfüllstoff" ist im Sinne der vorliegenden Erfindung ein Granulat mit gegenüber "normalen" Füllstoffen wesentlich niedrigerem Schüttgewicht zu verstehen. Die hier unter dem Begriff Leichtfüllstoffe beschriebenen Materialien haben ein Schüttgewicht von höchstens 600 kg/m³, bevorzugt von höchstens 500 kg/m³, besonders bevorzugt von höchstens 400 kg/m³. Die Form der Leichtfüllstoffe ist nicht beschränkt und kann insbesondere eine kugel-, plättchen-, stäbchen- und/oder lamellenförmige Struktur aufweisen. Die erfindungsgemäß eingesetzten Leichtfüllstoffe können, um nur eine Auswahl zu nennen, auf synthetischer oder natürlicher Basis sein, und beispielsweise eines oder mehrere der folgenden Materialien aufweisen: Mikrohohlkugeln aus Glas, Polymeren wie Polystyrolkugeln, Alumosilikaten, Siliciumoxid, Aluminium-Siliciumoxid, Calcium-Silikathydrat, Siliciumdioxid, Aluminium-Silikat, Magnesium-Silikat, Aluminium-Silikathydrat, Calcium-Aluminium-Silikat, Calcium-Silikathydrat, Aluminium-Eisen-Magnesium-Silikat, Calciummetasilikat. Bevorzugte Leichtfüllstoffe sind gewählt aus der Gruppe umfassend Perlite, Cellite, Cabosil, Circosil, Eurocell, Fillite, Promaxon, Vermex, Wollastönite und ein Gemisch mit einem oder mehreren der vorgenannten Leichtfüllstoffe. Ganz besonders bevorzugt ist/sind Blähglasgranulat, Flugasche, geblähte Vulkangesteine, Blähperlit oder ein Gemisch aus mehreren der vorgenannten Leichtfüllstoffe.

Grundsätzlich kann die Füllmasse zusätzlich auch noch mit einer faserförmigen Armierung, insbesondere mit Glasfasern oder dergleichen, als Verstärkung durchsetzt sein. Dies ist insbesondere dann von Vorteil, wenn Zement als Bindemittel verwendet wird. Zusätzlich oder alternativ ist auch denkbar, in die Füllmasse eine mattenförmige Armierung, insbesondere eine oder mehrere Fasermatten, bevorzugt eine oder mehrere Glasfasermatten, zu integrieren, insbesondere in oberflächennahe Schichten, vorzugsweise auf der von der Folie abgewandten Seite der Füllmasse, d.h. auf der Seite, die später die Unterseite der fertigen Klimabodenplatte bildet.

Nachdem das Bindemittel zumindest teilweise, vorzugsweise vollständig, ausgehärtet ist, wird gegebenenfalls zumindest ein Teil der Form von der Füllmasse entfernt. Wie im Weiteren noch näher ausgeführt wird, sind grundsätzlich folgende Varianten des Verfahrens und dementsprechend Varianten der Form, die mit der Füllmasse befüllt wird, denkbar: zum einen kann die Form lediglich aus einer Folie bestehen, die ausreichend stabil ausgelegt ist, dass die Füllmasse und damit die spätere Klimabodenplatte die gewünschte Form erhält. Diese Folie kann dann nach dem Aushärten des Bindemittels entweder vollständig oder teilweise von der Füllmasse entfernt werden oder die Folie - das heißt die ursprüngliche Form - verbleibt als Bestandteil der fertigen Klimabodenplatte an der Füllmasse. Zum Unterstützen der Folie beim Befüllen mit der Füllmasse kann zusätzlich mindestens noch ein weiteres Bauteil vorgesehen sein, auf dem oder in dem die Folie gelagert ist. Dieses Bauteil kann beispielsweise ein Boden und/oder ein Rahmen sein, wobei an den Stellen der späteren Nuten zusätzlich noch weitere unterstützende Formteile vorgesehen sein können. Die Form, in die die Füllmasse geschüttet wird, kann also auch aus einer Folie und weiteren Bauteilen bestehen, wobei nach dem Aushärten zumindest die weiteren Bauteile und gegebenenfalls auch, zumindest teilweise, die Folie entfernt wird. Schließlich ist es aber auch denkbar, eine Form ohne Verwendung einer Folie vorzusehen, wobei die Form eines oder mehrere der zuvor beschriebenen Bauteile wie einen Rahmen und/oder einen Boden und/oder unterstützende Formteile aufweisen kann. In diesem Fall wird die gesamte Form nach dem Aushärten von der Füllmasse entfernt, um die Klimabodenplatte zu erhalten.

Die vorangehend beschriebene Erfindung hat mehrere Vorteile: Zum einen wird die Handhabung der Klimabodenplatte schon dadurch vereinfacht, dass nicht mehr nachträglich aus einer Platte mit ebener Oberfläche Material weggefräst werden muss, um die entsprechenden Nuten zu erhalten und die entsprechenden Vorsprünge, insbesondere Noppen, zu bilden. Das erfindungsgemäße Verfahren ist auch deutlich ressourcenschonender, da kein Material von der ursprünglichen Platte mehr weggenommen werden muss (mit Ausnahme des üblichen Verschnitts beim Zuschneiden der Platten auf der Baustelle, d.h. beim Anpassen an die Raumgeometrie). Die Platte wird also direkt in ihrer endgültigen Ausbildung geformt. Zusätzlich ist das eingesetzte Material durch den Leichtfüllstoff, insbesondere das Blähglasgranulat, relativ leicht, aber trotzdem äußerst druckstabil und damit speziell auch für Fußböden einsetzbar. Außerdem läßt sich die fertige Platte auch leicht schneiden, beispielsweise mit einer Handsäge. Der erfindungsgemäß bevorzugt verwendete Leichtfüllstoff, insbesondere das bevorzugt verwendete Blähglasgranulat, hat je nach Körnung ein Schüttgewicht in einem Bereich von 400 bis 190 kg/m³ (im Mittel liegt das Schüttgewicht in einem Bereich von 200 bis 350 kg/m³, bevorzugt von 250 bis 320 kg/m³, besonders bevorzugt bei etwa 300 kg/m³). Versetzt mit einem Bindemittel, bei dem es sich um Zement, insbesondere Zement mit hoher Frühfestigkeit, beispielsweise Estrichzement, oder Kunststoff, insbesondere Harz, beispielsweise Epoxydharz, handeln kann, wird eine Rohdichte der Klimabodenplatte von höchstens 800 kg/m³, bevorzugt höchstens 700 kg/m³, besonders bevorzugt von höchstens 600 kg/m³, erhalten. Herkömmliche Gipsfaserplatten weisen eine Rohdichte von mehr als 1200 kg/m³ auf. Mit anderen Worten wird also eine Gewichtseinsparung von 45 bis 55 % erzielt, die die Handhabung der Klimabodenplatte weiter vereinfacht.

Durch Verwenden einer Folie, insbesondere Tiefziehfolie, als Form oder als Teil der Form, die insbesondere nach dem Aushärten an der Klimabodenplatte verbleibt, wird auch die Rohrhalterung verbessert. Die fertige Klimabodenplatte ist direkt mit Fliesen belegbar oder mit Spachtelmasse (selbstnivellierend oder standfest) verfüllbar. Mittels Verfüllen mit Spachtelmasse ergibt sich ein für alle Bodenbeläge geeigneter Untergrund. Die grobe Struktur des gebundenen Leichtfüllstoffs, insbesondere Blähglasgranulats, bildet hierfür einen sehr guten Untergrund. Durch die Druckfestigkeit der Platte und der Weiterverarbeitung mit Spachtelmassen sind dünnschichtige Bodenaufbauten realisierbar. Diese Platten können bei Verwendung von Zement oder Kunststoff, inbesondere Harz, als Bindemittel außerdem in Nassräumen eingesetzt werden.

Noch ein weiterer Vorteil ist, dass bei der Herstellung der Klimabodenplatte auf einfache Weise individuelle Verläufe der Rohrleitungen berücksichtigt werden können. Die Rohrleitungen lassen sich so auch besonders einfach verlegen; z.B. müssen diese nicht mehr zwingend mäanderförmig verlegt werden.

Gemäß einer Ausgestaltung des erfindungsgemäßen Verfahrens enthält bei dem Schritt des Befüllens des unteren Füllabschnitts die Füllmasse Leichtfüllstoff, insbesondere Blähglasgranulat, mit einer durchschnittlichen (bzw. mittleren) Korngröße von mindestens 0,5 mm, bevorzugt mindestens 0,8 mm, besonders bevorzugt mindestens 1,0 mm. Dieser relativ grobkörnige Leichtfüllstoff führt zu einem besonders geringen Gewicht der Klimabodenplatte. Ein weiterer Vorteil ist, dass sich die Spachtelmasse, die anschließend auf der Klimabodenplatte und den Rohren verfüllt wird, besonders gut mit der Klimabodenplatte verbinden kann. Dabei ist es grundsätzlich denkbar, die gesamte Klimabodenplatte, also auch den oberen Füllabschnitt, mit diesem relativ groben Leichtfüllstoff, insbesondere Blähglasgranulat, herzustellen. Wie im Weiteren noch erläutert wird, kann es aber auch vorteilhaft sein, wenn der obere Füllabschnitt, der später auf dem Untergrund aufliegt, Leichtfüllstoff, insbesondere Blähglasgranulat, einer kleineren durchschnittlichen Korngröße enthält.

Bei dem Schritt des Befüllens des unteren Füllabschnitts ist es denkbar, dass die Füllmasse Leichtfüllstoff, insbesondere Blähglasgranulat, mit verschiedenen Korngrößen enthält, wobei die kleinste Korngröße dann mindestens 0,1 mm und die größte Korngröße höchstens 4 mm beträgt. Dieses Korngrößenspektrum hat sich als besonders günstig für die Druckstabilität erwiesen und gewährleistet gleichzeitig auch ein relativ geringes Gewicht der Klimabodenplatte.

Bei dem erfindungsgemäßen Verfahren enthält wie gesagt bei dem Schritt des Befüllens des oberen Füllabschnitts die Füllmasse Leichtfüllstoff, insbesondere Blähglasgranulat, mit einer durchschnittlichen (das heißt mittleren) Korngröße, die kleiner als die durchschnittliche (mittlere) Korngröße des im unteren Füllabschnitt verwendeten Leichtfüllstoffs ist. Auf diese Weise läßt sich mit der Klimabodenplatte zusätzlich auch eine Dämmfunktion erzielen.

Insbesondere ist vorgesehen, dass bei dem Schritt des Befüllens des oberen Füllabschnitts die Füllmasse Leichtfüllstoff, insbesondere Blähglasgranulat, mit einer durchschnittlichen Korngröße von höchstens 1,0 mm, bevorzugt höchstens 0,8 mm, besonders bevorzugt höchstens 0,5 mm, enthält. Dabei ist denkbar, dass bei dem Schritt des Befüllens des oberen Füllabschnitts die Füllmasse Leichtfüllstoff, insbesondere Blähglasgranulat, mit verschiedenen Korngrößen enthält, wobei die kleinste Korngröße mindestens 0,1 mm und die größte Korngröße höchstens 2 mm beträgt. Mit diesen Werten bzw. Wertebereichen läßt sich eine gute Dämmfunktion erreichen, wobei gleichzeitig auch noch ein relativ geringes Gewicht und eine ausreichende Stabilität der Klimabodenplatte gewährleistet ist.

Gemäß noch einer Ausgestaltung des erfindungsgemäßen Verfahrens ist vorgesehen, dass beim Befüllen die Füllhöhe im unteren Füllabschnitt in einem Bereich von 10 bis 50 mm, bevorzugt in einem Bereich von 12 bis 35 mm, besonders bevorzugt in einem Bereich von 15 bis 25 mm, und/oder die Füllhöhe im oberen Füllabschnitt in einem Bereich von 3 bis 30 mm, bevorzugt in einem Bereich von 4 bis 20 mm, besonders bevorzugt in einem Bereich von 5 bis 10 mm, liegt. Diese Füllhöhenbereiche ermöglichen es, eine ausreichende Stabilität und gegebenenfalls auch Dämmung der Platte zu gewährleisten.

Gemäß einer weiteren Ausgestaltung des erfindungsgemäßen Verfahrens wird zum Erzeugen der Füllmasse der Leichtfüllstoff, insbesondere das Blähglasgranulat, mit Zement, insbesondere Zement mit hoher Frühfestigkeit, beispielsweise Estrichzement, oder Kunststoff, insbesondere Harz, beispielsweise Epoxydharz, als Bindemittel vermischt.

Diese Bindemittel haben den Vorteil, dass die Platte eine besonders hohe Druckfestigkeit in Verbindung mit Leichtfüllstoffen, insbesondere Blähglasgranulat, erhält.

Gemäß noch einer weiteren Ausgestaltung des erfindungsgemäßen Verfahrens wird, wie bereits zuvor angedeutet wurde, die Form nach dem Aushärten des Bindemittels vollständig von der Füllmasse entfernt, wobei insbesondere als Form oder Teil der Form, die den unteren Füllabschnitt, insbesondere den unteren Füllabschnitt und den oberen Füllabschnitt, bildet, ein Rahmen, gegebenenfalls mit einem die Form nach unten abschließenden Boden, zusammen mit Formteilen, die Vorsprünge (z.B. Noppen) oder Vertiefungen (z.B. Nuten) formen, verwendet wird. Eine solche Form kann beispielsweise aus Silikon bestehen, wodurch sich das Füllmaterial nach dem Aushärten besonders gut aus der Form herauslösen läßt. Grundsätzlich könnte auch als Form oder Teil der Form eine Kunststofffolie, insbesondere eine durch Tiefziehen erhaltene Kunststofffolie, verwendet wird, die den unteren Füllabschnitt, insbesondere den unteren Füllabschnitt und den oberen Füllabschnitt, bildet. In diesen beiden Fällen ist also kein Teil der Form Bestandteil der Klimabodenplatte. Vielmehr besteht diese insbesondere nur aus dem Leichtfüllstoff, vorzugsweise dem Blähglasgranulat, und dem Bindemittel.

Alternativ ist aber auch denkbar, dass die Form nach dem Aushärten des Bindemittels zumindest teilweise, vorzugsweise vollständig, mit der Füllmasse verbunden bleibt und zusammen mit der Füllmasse die Klimabodenplatte bildet, wobei insbesondere als Form oder der Teil der Form, die/der zusammen mit der Füllmasse die Klimabodenplatte bildet, eine Kunststofffolie, insbesondere eine durch Tiefziehen erhaltene Kunststofffolie, verwendet wird, die den unteren Füllabschnitt, insbesondere den unteren Füllabschnitt und den oberen Füllabschnitt, bildet. In diesem Fall ist die Form oder ein Teil der Form zwangsläufig auch Bestandteil der Klimabodenplatte. Insbesondere umgeben Teile der Kunststofffolie die Vorsprünge, insbesondere die Noppen, und/oder kleiden die jeweilige Nut zwischen zwei benachbarten Vorsprüngen aus, wodurch eine verbesserte Rohrhalterung gewährleistet wird.

Die Form (Gussform) zur Herstellung einer Klimabodenplatte ist mit einem oberen Füllabschnitt und mit einem unteren Füllabschnitt versehen, der von mindestens einer Vertiefung gebildet wird, wobei zumindest ein Teil der Form, vorzugsweise die gesamte Form, eine Kunststofffolie, insbesondere eine durch Tiefziehen hergestellte Kunststofffolie, ist, die zumindest den unteren Füllabschnitt bildet, und wobei die Form oberseitig offen ist.

"Oberseitig" bzw. "Oberseite" meint dabei die Seite, von der die Form später befüllt wird. Entsprechend ist im Folgenden mit "unterseitig" bzw. "Unterseite" die Seite der Form gemeint, die von der vorangehend definierten Oberseite abgewandt ist, also die Seite, auf der die Form aufliegt.

Erfindungsgemäß wird also erstmalig zur Herstellung einer Klimabodenplatte eine Form verwendet, in die eine Füllmasse eingefüllt wird, wodurch ermöglicht wird, eine Klimabodenplatte direkt in ihrer endgültigen Ausbildung zu formen. Dabei hat die Verwendung einer Kunststofffolie als Teil der Form bzw. als Form den zusätzlichen Vorteil, dass die Folie nach dem Aushärten an der Füllmasse verbleiben kann und damit Bestandteil der späteren Klimabodenplatte ist. Letzteres verbessert die Halteeigenschaften der zwischen den Vorsprüngen der späteren Klimabodenplatte ausgebildeten Nuten.

Gemäß einer Ausgestaltung bildet die Kunststofffolie auch den oberen Füllabschnitt, wobei die Kunststofffolie im oberen Füllabschnitt insbesondere Löcher, beispielsweise Ausstanzungen, aufweist. Diese Löcher bzw. Ausstanzungen haben den Vorteil, dass in dem Fall, dass die Folie nach Fertigstellung, das heißt nach dem Aushärten, an der übrigen Klimabodenplatte verbleibt, dennoch Bereiche vorhanden bleiben, in denen sich die Spachtelmasse, die später auf den Klimabodenplatten verteilt wird, mit dem Leichtfüllstoff, insbesondere Blähglasgranulat, verbinden kann. Mit anderen Worten wird die grobe Struktur des Leichtfüllstoffs der Spachtelmasse unmittelbar ausgesetzt und kommt dadurch unmittelbar mit dieser in Kontakt, was zu einer verbesserten Verbindung zwischen Klimabodenplatte und Spachtelmasse und letztlich auch zu einer verbesserten Fixierung der Wärmetauscherrohre führt. Dabei können die Löcher bzw. Ausstanzungen in der Folie bereits vor dem Befüllen mit der Füllmasse vorgesehen sein, wobei es aber auch denkbar ist, die Löcher bzw. Ausstanzungen in der Folie erst nach dem Befüllen und insbesondere nach dem Aushärten vorzusehen. Letzteres kann den Befüllvorgang vereinfachen, da durch die zu diesem Zeitpunkt noch nicht vorhandenen Löcher auch keine Füllmasse ungewollte austreten kann.

Gemäß noch einer Ausgestaltung ist vorgesehen, dass der untere Füllabschnitt von mehreren Vertiefungen gebildet ist, wobei jede Vertiefung wiederum dadurch gebildet ist, dass die Kunststofffolie den Raum der Vertiefung ring- oder napfförmig umschließt, wobei insbesondere die Form der Vertiefung der unterseitigen Form der Kunststofffolie entspricht.

Mit dem "Raum der Vertiefung" ist das von der Vertiefung eingenommene bzw. gebildete Volumen gemeint, welches später mit der Füllmasse befüllt wird. "Napfförmig" bedeutet, dass die Folie den Raum der Vertiefung nicht nur in radialer Richtung, sondern auch in vertikaler Richtung begrenzt, so dass die Vertiefung bzw. das die Vertiefung umgebende Material der Form eines Napfes, das heißt eines Elements mit einer umlaufenden Seitenwand und einem Boden, entspricht. "Ringförmig" bedeutet dagegen, dass die Vertiefung lediglich in radialer Richtung umschlossen ist, in vertikaler Richtung jedoch nicht. Damit in letzterem Fall beim Befüllen die Füllmasse dennoch in vertikaler Richtung gehalten wird, muss in vertikaler Richtung eine zusätzliche Abdeckung, beispielsweise in Form eines einen Boden bildenden Elements, vorgesehen werden. Diese Abdeckung kann dann nach dem Aushärten wieder entfernt werden.

Sowohl eine den Raum der jeweiligen Vertiefung ringförmig umschließende als auch eine den Raum der jeweiligen Vertiefung napfförmig umschließende Folie bewirkt, dass im Bereich der jeweiligen Vertiefung bei der fertigen Klimabodenplatte ein der Form der Vertiefung entsprechender noppenförmiger Vorsprung gebildet wird. Grundsätzlich ist es aber auch denkbar, den Raum der jeweiligen Vertiefung so zu formen bzw. so mit der Form, insbesondere der Folie, zu umschließen, dass in diesem Bereich bei der späteren Klimabodenplatte ein länglicher Vorsprung gebildet wird. Zwischen zwei länglichen Vorsprüngen würde auf diese Weise dann eine entsprechend längliche Nut gebildet. Mit anderen Worten kann durch die erfindungsgemäße Form abhängig von der Ausbildung der jeweiligen Vertiefungen als Klimabodenplatte sowohl eine Kopfplatte mit noppenförmigen Vorsprüngen als auch eine Grundplatte mit länglichen, parallelen Nuten hergestellt werden.

Der horizontale bzw. radiale Querschnitt der Vertiefungen der Form bzw. der Folie bestimmt auch den späteren minimalen Rohrabstand der Klimabodenplatte. Bevorzugt liegt dabei der horizontale Querschnitt bzw. der Durchmesser der jeweiligen Vertiefung an der engsten Stelle (der Querschnitt bzw. Durchmesser der Vertiefung kann in vertikaler Richtung variieren) in einem Bereich von 70 bis 150 mm, bevorzugt in einem Bereich von 90 bis 130 mm, besonders bevorzugt in einem Bereich von 100 bis 120 mm. Diese Wertebereiche entsprechen dann im Wesentlichen auch dem späteren minimalen Rohrabstand.

Gemäß noch einer Ausgestaltung bildet die Kunststofffolie zwischen zwei jeweils benachbarten ring- oder napfförmigen Abschnitten eine Nut aus. Diese Nut entspricht der späteren Rohrführungsnut. Dabei ist es denkbar, dass die Kunststofffolie im jeweils unteren Teil zweier benachbarter Vertiefungen, also in dem Teil der Vertiefungen, der der Unterseite der Folie am nächsten liegt, mit einem Hinterschnitt versehen ist, der die Nut an einer vom Nutgrund beabstandeten Stelle, insbesondere am oberen Ende der Nut, verengt. Der Hinterschnitt ist dabei insbesondere um die gesamte Vertiefung umlaufend ausgebildet. Denkbar ist aber auch, dass der Hinterschnitt nur an der Stelle oder den Stellen der jeweiligen Vertiefung vorgesehen ist, die der am nächsten liegenden benachbarten Vertiefung gegenüberliegen; der Hinterschnitt ist also nur dort vorgesehen, wo später ein Rohr in vertikaler Richtung fixiert werden können soll. Bei der fertigen Klimabodenplatte ergibt sich auf diese Weise am oberen Ende des jeweiligen Vorsprungs eine, beispielsweise umlaufende, radiale Erweiterung und entsprechend am oberen Ende der Nut eine verengte Stelle, die die Rohrfixierung verbessert.

Gemäß wieder einer weiteren Ausgestaltung hat die Kunststofffolie im oberen Füllabschnitt und/oder im unteren Füllabschnitt überwiegend eine Dicke in einem Bereich von 0,4 bis 2 mm, bevorzugt in einem Bereich von 0,5 bis 1,5 mm, besonders bevorzugt in einem Bereich von 0,6 bis 1 mm. Insbesondere hat die Kunststofffolie im oberen Füllabschnitt und/oder im unteren Füllabschnitt überall, das heißt vollständig, eine Dicke in einem der vorgenannten Wertebereiche. Eine Folie, die im oberen Füllabschnitt und/oder im unteren Füllabschnitt eine solche Dicke hat, ist einerseits beim Herstellungsprozess besonders gut zur Formgebung geeignet und benötigt insbesondere nicht zwingend weitere Bauteile, die die Folie beim Befüllen halten und unterstützen. Andererseits hat eine solche Dicke den Vorteil, dass die Rohre, wenn die Folie im Bereich der jeweiligen Nut beibehalten wird, besonders gut gehalten werden.

Schließlich wird die Aufgabe gemäß einer zweiten Lehre der vorliegenden Erfindung bei einer Klimabodenplatte durch die Merkmale des kennzeichnenden Teils von Patentanspruch 8 gelöst. Die Aufgabe wird also bei einer Klimabodenplatte, beispielsweise einer Grund- oder Kopfplatte, insbesondere hergestellt durch ein wie zuvor beschriebenes Verfahren, mit einem unteren plattenförmigen Abschnitt und mit einem in vertikaler Richtung daran angrenzenden und damit verbundenen oberen Abschnitt, der von mindestens einem Vorsprung gebildet wird, wobei der untere Abschnitt und der obere Abschnitt von einer ausgehärteten Füllmasse gebildet ist, die einen Leichtfüllstoff, insbesondere Blähglasgranulat, und Bindemittel sowie gegebenenfalls Glasfasern enthält, dadurch gelöst, dass die durchschnittliche Korngröße im unteren Abschnitt kleiner als im oberen Abschnitt ist.

Der untere plattenförmige Abschnitt wurde dabei durch den oberen Füllabschnitt der Form bzw. der Folie geformt, wobei der obere Abschnitt, der von dem mindestens einen Vorsprung, beispielsweise dem jeweiligen Noppen, gebildet wird, durch den unteren Füllabschnitt der Form geformt wurde.

Gemäß einer Ausgestaltung der erfindungsgemäßen Klimabodenplatte beträgt der Anteil des Leichtfüllstoffs, insbesondere des Blähglasgranulats, an der gesamten ausgehärteten Füllmasse mehr als 30 Gew.-%, bevorzugt mehr als 35 Gew.-%, besonders bevorzugt mehr als 40 Gew.-%, und/oder mehr als 60 Vol.-%, bevorzugt mehr als 70 Vol.-%, besonders bevorzugt mehr als 80 Vol.-%. Auf diese Weise wird eine besonders leichte Klimabodenplatte geschaffen.

Wie gesagt ist die durchschnittliche Korngröße im unteren Abschnitt der Klimabodenplatte, der also durch den oberen Füllabschnitt der Form geformt wurde, kleiner als im oberen Abschnitt der Klimabodenplatte, der also durch den unteren Füllabschnitt der Form geformt wurde, um dadurch zusätzlich auch eine Dämmfunktion im unteren Abschnitt der Klimabodenplatte zu erreichen.

Gemäß noch einer Ausgestaltung der erfindungsgemäßen Klimabodenplatte ist, wie bereits zuvor beschrieben, vorgesehen, dass der obere Abschnitt der Klimabodenplatte zumindest abschnittsweise von einer Kunststofffolie abgedeckt ist, die insbesondere den mindestens einen Vorsprung ring- oder napfförmig umschließt und/oder eine zwischen zwei benachbarten Vorsprüngen ausgebildete Nut auskleidet.

Es gibt nun eine Vielzahl von Möglichkeiten, das erfindungsgemäße Verfahren und die erfindungsgemäße Klimabodenplatte auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1a) bis c): verschiedene Schnittansichten von Ausführungsbeispielen einer erfindungsgemäßen Klimabodenplatte,
- Fig. 2a) bis c): weitere Schnittansichten verschiedener Ausführungsbeispiele einer erfindungsgemäßen Klimabodenplatte,
- Fig. 3: eine Schnittansicht eines weiteren Ausführungsbeispiels einer erfindungsgemäßen Klimabodenplatte,
- Fig. 4a): eine perspektivische Ansicht einer Klimabodenplatte gemäß den Schnittansichten in den Figuren 1b) und 2b),
- Fig. 4b): eine perspektivische Ansicht einer Klimabodenplatte gemäß den Schnittansichten in den Figuren 1b) und 2c), und
- Fig. 5: eine schematische Darstellung der Herstellung einer Klimabodenplatte mit einer Form.

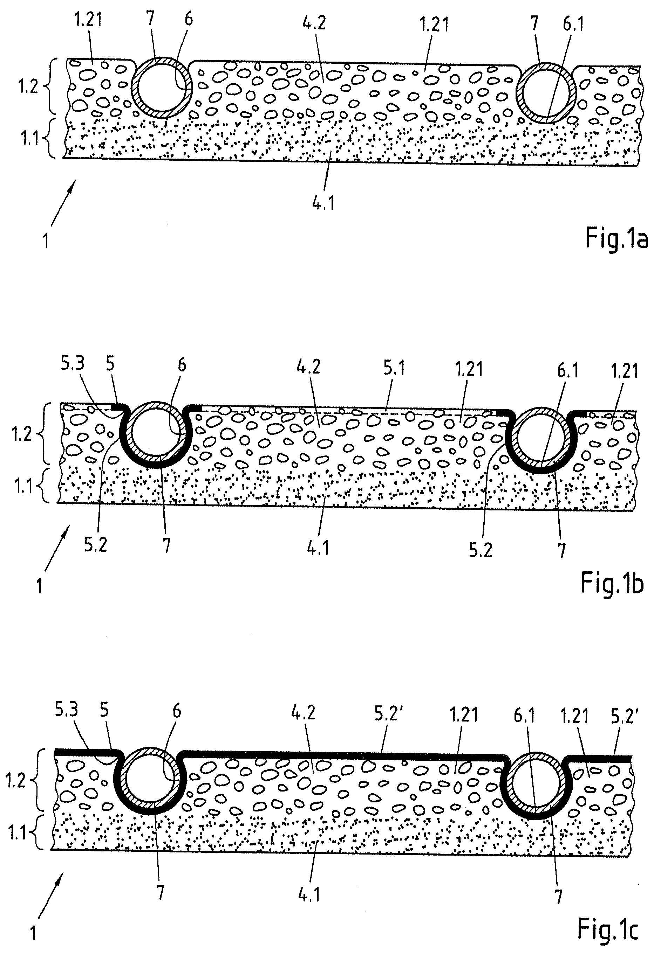

Fig. 1a) zeigt eine Klimabodenplatte 1 mit eingesetzten Wärmetauscherrohren 7 mit dem folgenden Aufbau: Die Klimabodenplatte 1 hat einen unteren plattenförmigen Abschnitt 1.1 und einen oberen Abschnitt 1.2, der von mehreren noppenförmigen Vorsprüngen 1.21 gebildet wird. Die Klimabodenplatte 1 wird von einer ausgehärteten Füllmasse 4.1, 4.2 enthaltend Blähglasgranulat als Leichtfüllstoff und Bindemittel gebildet. Dabei ist die durchschnittliche Korngröße des Blähglasgranulats im oberen Abschnitt 1.2 größer als im unteren Abschnitt 1.1.

Zwischen zwei noppenförmigen Vorsprüngen 1.21 ist jeweils eine Nut 6 ausgebildet, wobei der Nutgrund, bezogen auf die vertikale Richtung, hier in einer Höhe verläuft, in der auch die Grenze zwischen größerer Korngröße und kleinerer Korngröße des Blähglasgranulats verläuft.

Fig. 1b) zeigt bei einem weiteren Ausführungsbeispiel einer Klimabodenplatte 1 einen Schnitt wie Fig. 1a), der ebenfalls orthogonal zu der Verlaufsrichtung der Rohre 7 verläuft. Bei dem in Fig. 1b) dargestellten Ausführungsbeispiel ist das Blähglasgranulat im Wesentlichen genau so wie in Fig. 1a) geschichtet, wobei die Klimabodenplatte 1 allerdings zusätzlich noch über eine Kunststofffolie 5 verfügt, die die Nuten 6 abdeckt. Die noppenförmigen Vorsprünge 1.21 sind zur Oberseite hin nicht von der Folie abgedeckt, so dass später aufgebrachte Spachtelmasse unmittelbar mit der ausgehärteten Masse 4.2 bzw. dem Blähglasgranulat in Kontakt kommt.

Fig. 1c) zeigt ein ähnliches Ausführungsbeispiel wie Fig. 1b), wobei hier jedoch die Kunststofffolie 5 die noppenförmigen Vorsprünge 1.21 durch einen napfförmigen Abschnitt 5.2' zur Seite hin und nach oben hin abdeckt.

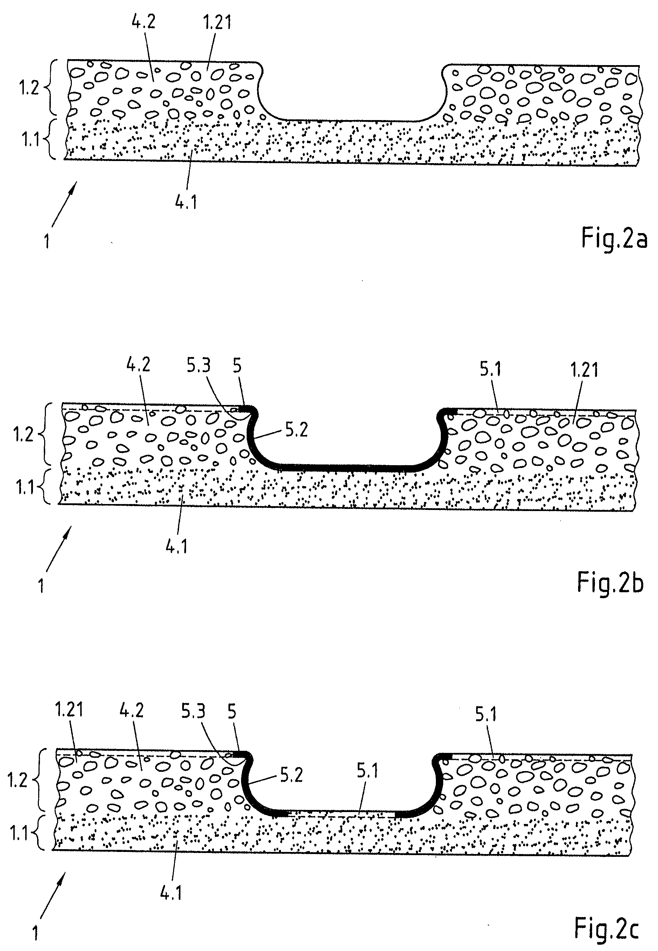

Die Figuren 2a) bis c) zeigen Schnitte, die gegenüber den Schnitten in den Figuren 1a) bis c) um 45° versetzt sind. Außerdem wurde zur besseren Veranschaulichung in den Figuren 2a) bis c) auf die Darstellung der Rohre 7 verzichtet.

Fig. 2a) zeigt dasselbe Ausführungsbeispiel wie Fig. 1a). Die Figuren 2b) und c) zeigen unterschiedliche Ausführungsbeispiele, wobei die in Fig. 1b) gezeigte Schnittdarstellung für beide Ausführungsbeispiele zutrifft.

Fig. 2c) zeigt dabei eine Besonderheit in dem hier gewählten Schnitt. So weist die Kunststofffolie 5 nicht nur auf der Oberseite der Vorsprünge 1.21, sondern auch auf der Oberseite des unteren plattenförmigen Abschnitts 1.1 Öffnungen 5.1 in Form von Ausstanzungen auf, die dazu dienen, dass sich später aufgebrachte Spachtelmasse mit der Masse 4.1 bzw. dem Blähglasgranulat verbinden kann. Fig. 2b) zeigt dagegen in diesem Bereich eine geschlossene Kunststofffolie 5.

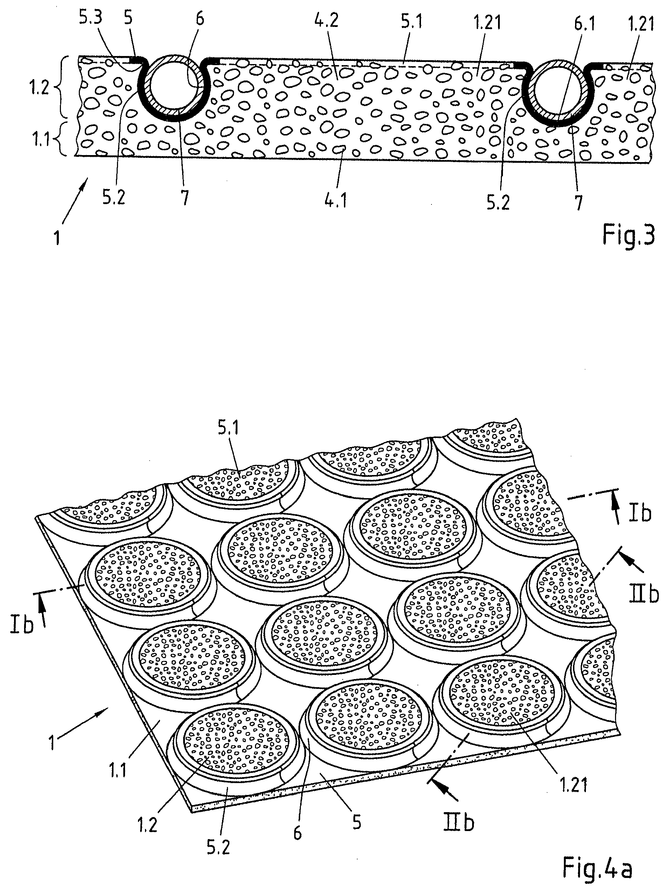

Fig. 3 zeigt schließlich ein Ausführungsbeispiel, bei dem die Folie wie in Fig. 1b) ausgebildet ist, jedoch die durchschnittliche Korngröße des Blähglasgranulats über die gesamte Dicke der Klimabodenplatte 1 gleich ist.

Bei allen Ausführungsbeispielen, bei denen eine Folie 5 verwendet worden ist, ist außerdem erkennbar, dass die Folie 5 in dem Bereich, der bei der Klimabodenplatte 1 das obere Ende der Nut bildet, einen Hinterschnitt 5.3 aufweist. Mit anderen Worten verläuft die Füllmasse 4.2, die die noppenförmigen Vorsprünge 1.21 bildet, zur Oberseite der Klimabodenplatte 1 hin radial nach außen, wodurch die Nuten 6 in diesem Bereich verengt werden. Die Kunststofffolie 5 hat dabei überall dieselbe Dicke.

Einen solchen Verlauf der Vorsprünge 1.21 bzw. der dazwischen gebildeten Nuten 6 zeigen auch die Figuren 1a) und 2a), jedoch ohne die zusätzliche Kunststofffolie 5.

Fig. 4a) zeigt eine perspektivische Ansicht des Ausführungsbeispiels einer Klimabodenplatte 1 gemäß den Figuren 1b) und 2b). Hier ist erkennbar, dass die Klimabodenplatte 1 oberseitig eine Kunststofffolie 5 aufweist, die den unteren plattenförmigen Abschnitt 1.1 nach oben hin begrenzt und die Vorsprünge 1.21 durch einen ringförmigen Folienabschnitt 5.2 radial begrenzt. Zur Oberseite hin sind die Vorsprünge 1.21 nicht von einer Folie begrenzt.

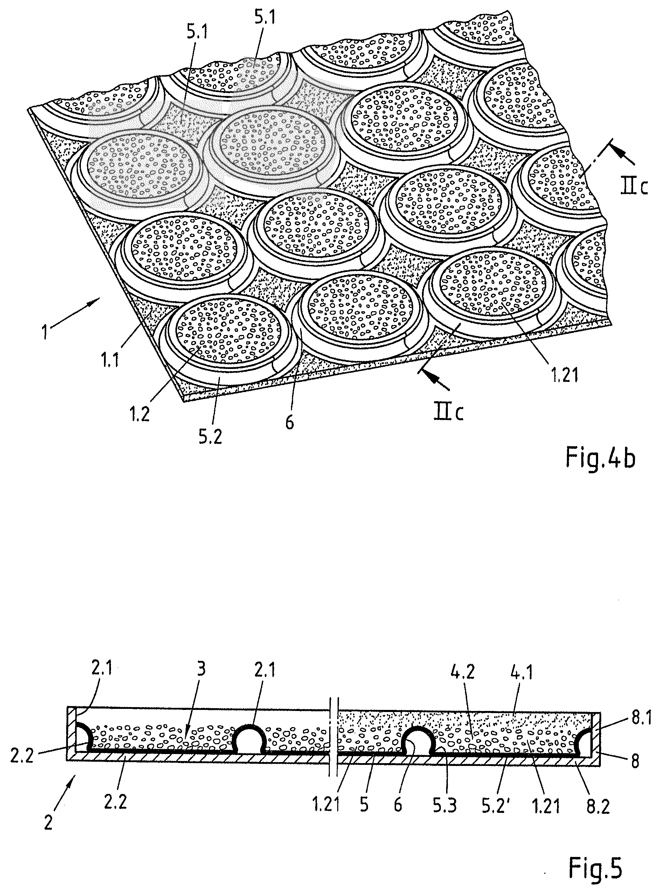

Fig. 4b) zeigt ebenfalls eine perspektivische Ansicht, diesmal eines Ausführungsbeispiels gemäß den Figuren 1b) und 2c). Hier ist erkennbar, dass auch der untere plattenförmige Abschnitt 1.1 der Klimabodenplatte 1 nicht vollständig von der Kunststofffolie 5 bedeckt ist, sondern zwischen den Vorsprüngen 1.21 Öffnungen 5.1 bzw. Ausstanzungen vorgesehen sind.

Fig. 5 zeigt schließlich eine schematische Darstellung des erfindungsgemäßen Herstellungsverfahrens für eine Klimabodenplatte 1 sowie eine entsprechende Form 2.

Die Form 2 besteht aus einem oberen Füllabschnitt 2.1 und einem unteren Füllabschnitt 2.2. Der obere Füllabschnitt 2.1 bildet nachher den unteren plattenförmigen Abschnitt 1.1 der fertigen Klimabodenplatte, während der untere Füllabschnitt 2.2 die späteren Vorsprünge 1.21 der Klimabodenplatte 1 bildet.

Die Form 2 weist im vorliegenden Fall eine Kunststofffolie 5 auf, bei der es sich um eine Tiefziehfolie handelt, die bereits die Form bzw. Kontur der späteren Klimabodenplatte 1 vorgibt. Die Folie 5 wird zusätzlich noch durch eine äußere Kastenform 8 unterstützt, die einen umlaufenden Rahmen 8.1 und einen Boden 8.2 aufweist. Die Kastenform 8 wird am Ende des Herstellungsvorgangs wieder entfernt, wohingegen die Kunststofffolie 5 bestehen bleibt und später einen Bestandteil der Klimabodenplatte 1 bildet. Grundsätzlich ist es auch denkbar, nur die Kastenform 8 als Form 2 (ohne eine Folie 5) zu verwenden, wobei dann nach dem Entfernen der Form 2 die Klimabodenplatte 1 keine Folie als Bestandteil hätte.

Im vorliegenden Fall wird der obere Füllabschnitt 2.1 von einem oberen Teil des Rahmens 8.1 der Kastenform 8 und dem am weitesten nach oben hervorstehenden und in einer horizontalen Ebene verlaufenden Teil der Folie 5 gebildet. Der untere Füllabschnitt 2.2 wird hier von einem oberen Teil des Rahmens 8.1 und vom Boden 8.2 der Kastenform 8 sowie von der übrigen Folie 5 gebildet.

Auf der linken Seite von Fig. 5 ist dargestellt, dass zunächst der untere Füllabschnitt 2.2 mit einer Füllmasse 4.2 enthaltend Blähglasgranulat einer relativ großen durchschnittlichen Korngröße und Bindemittel befüllt wird. Die Füllhöhe reicht bis zu den oberen Abschnitten der Kunststofffolie 5, die später den Nutgrund 6.1 bilden.

Auf der rechten Seite von Fig. 5 ist das nachfolgende Befüllen des oberen Füllabschnitts 2.1 dargestellt, wobei hier die Füllmasse 4.1 neben Bindemittel Blähglasgranulat einer kleineren durchschnittlichen Korngröße aufweist.

## Patentansprüche

1. Verfahren zum Herstellen einer Klimabodenplatte (1), bei dem die folgenden Schritte durchgeführt werden:
- Bereitstellen einer Form (2) mit einem oberen Füllabschnitt (2.1) und einem in vertikaler Richtung daran angrenzenden unteren Füllabschnitt (2.2), der von mindestens einer Vertiefung (3) gebildet wird,
- Befüllen des unteren Füllabschnitts (2.2) mit einer Füllmasse (4.2) enthaltend einen Leichtfüllstoff und Bindemittel,
- Befüllen des oberen Füllabschnitts (2.1) mit einer Füllmasse (4.1) enthaltend einen Leichtfüllstoff und Bindemittel, wobei sich die Füllmasse (4.2) im unteren Füllabschnitt (2.2) mit der Füllmasse (4.1) im oberen Füllabschnitt (2.1) verbindet,
- Aushärten des Bindemittels
**dadurch gekennzeichnet, dass** bei dem Schritt des Befüllens des oberen Füllabschnitts (2.1) die Füllmasse (4.1) Leichtfüllstoff mit einer durchschnittlichen Korngröße enthält, die kleiner als die durchschnittliche Korngröße des im unteren Füllabschnitt (2.2) verwendeten Leichtfüllstoffs ist.

2. Verfahren nach Anspruch 1, **dadurch gekennzeichnet, dass** bei dem Schritt des Befüllens des unteren Füllabschnitts (2.2) die Füllmasse (4.2) Leichtfüllstoff
- mit einer durchschnittlichen Korngröße von mindestens 0,5 mm, bevorzugt mindestens 0,8 mm, besonders bevorzugt mindestens 1,0 mm, und/oder
- mit verschiedenen Korngrößen enthält, wobei die kleinste Korngröße mindestens 0,1 mm und die größte Korngröße höchstens 4 mm beträgt.

3. Verfahren nach einem der vorangehenden Ansprüche, **dadurch gekennzeichnet, dass** bei dem Schritt des Befüllens des oberen Füllabschnitts (2.1) die Füllmasse (4.1) Leichtfüllstoff
- mit einer durchschnittlichen Korngröße von höchstens 1,0 mm, bevorzugt höchstens 0,8 mm, besonders bevorzugt höchstens 0,5 mm, und/oder
- mit verschiedenen Korngrößen enthält, wobei die kleinste Korngröße mindestens 0,1 mm und die größte Korngröße höchstens 2 mm beträgt.

4. Verfahren nach einem der vorangehenden Ansprüche, **dadurch gekennzeichnet, dass** beim Befüllen die Füllhöhe im unteren Füllabschnitt (2.2) in einem Bereich von 10 bis 50 mm, bevorzugt in einem Bereich von 12 bis 35 mm, besonders bevorzugt in einem Bereich von 15 bis 25 mm, und/oder die Füllhöhe im oberen Füllabschnitt (2.1) in einem Bereich von 3 bis 30 mm, bevorzugt in einem Bereich von 4 bis 20 mm, besonders bevorzugt in einem Bereich von 5 bis 10 mm, liegt.

5. Verfahren nach einem der vorangehenden Ansprüche, **dadurch gekennzeichnet, dass** zum Erzeugen der Füllmasse (4.1,4.2) der Leichtfüllstoff mit Zement oder Kunststoff als Bindemittel vermischt wird.

6. Verfahren nach einem der vorangehenden Ansprüche, **dadurch gekennzeichnet, dass** die Form (2) nach dem Aushärten des Bindemittels vollständig von der Füllmasse (4.1,4.2) entfernt wird.

7. Verfahren nach einem der Ansprüche 1 bis 5, **dadurch gekennzeichnet, dass** die Form (2) nach dem Aushärten des Bindemittels zumindest teilweise, vorzugsweise vollständig, mit der Füllmasse (4.1,4.2) verbunden bleibt und zusammen mit der Füllmasse (4.1,4.2) die Klimabodenplatte (1) bildet, wobei insbesondere als Form (2) oder der Teil der Form (2), die/der zusammen mit der Füllmasse (4.1,4.2) die Klimabodenplatte (1) bildet, eine Kunststofffolie (5), insbesondere eine durch Tiefziehen erhaltene Kunststofffolie (5) verwendet wird, die den unteren Füllabschnitt (2.2), insbesondere den unteren Füllabschnitt (2.2) und den oberen Füllabschnitt (2.1), bildet.

8. Klimabodenplatte (1), insbesondere hergestellt durch ein Verfahren nach einem der Ansprüche 1 bis 7,
- mit einem unteren plattenförmigen Abschnitt (1.1) und
- mit einem in vertikaler Richtung daran angrenzenden und damit verbundenen oberen Abschnitt (1.2), der von mindestens einem Vorsprung (1.21) gebildet wird,
wobei der untere Abschnitt (1.1) und der obere Abschnitt (1.2) von einer ausgehärteten Füllmasse (4.1,4.2) gebildet ist, die Leichtfüllstoff und Bindemittel enthält,
**dadurch gekennzeichnet, dass** die durchschnittliche Korngröße im unteren Abschnitt (1.1) kleiner als im oberen Abschnitt (1.2) ist.

9. Klimabodenplatte (1) nach Anspruch 8, **dadurch gekennzeichnet, dass** der Anteil des Leichtfüllstoffs an der gesamten ausgehärteten Füllmasse (4.1,4.2) mehr als 30 Gew.-%, bevorzugt mehr als 35 Gew.-%, besonders bevorzugt mehr als 40 Gew.-%, und/oder mehr als 60 Vol.-%, bevorzugt mehr als 70 Vol.-%, besonders bevorzugt mehr als 80 Vol.-%, beträgt.

10. Klimabodenplatte (1) nach einem der Ansprüche 8 oder 9,
**dadurch gekennzeichnet, dass** der obere Abschnitt (1.2) zumindest abschnittsweise von einer Kunststofffolie (5) abgedeckt ist, die insbesondere den mindestens einen Vorsprung (1.21) ring- oder napfförmig umschließt und/oder eine zwischen zwei benachbarten Vorsprüngen (1.21) ausgebildete Nut (6) auskleidet.

## Claims

1. Method for producing an air-conditioning floorplate (1) in which the following steps are carried out:
- providing a mould (2) with an upper filling section (2.1) and an adjoining lower filling section (2.2) in the vertical direction, which is formed by at least one recess (3),
- filling the lower filling section (2.2) with a filling compound (4.2) containing a lightweight filler and binder,
- filling the upper filling section (2.1) with a filling compound (4.1) containing a lightweight filler and binder, wherein the filling compound (4.2) in the lower filling section (2.2) connects with the filling compound (4.1) in the upper filling compound (2.1),
- curing the binder,
**characterized in that** in the step of filing the upper filling section (2.1) the filling compound (4.1) contains lightweight filler having an average grain size which is smaller than the average grain size of the lightweight filler used in the lower filling section (2.2).

2. The method according to claim 1, **characterized in that** in the step of filling the lower filling section (2.2) the filling compound (4.2) contains lightweight filler
- having an average grain size of at least 0,5 mm, preferably at least 0,8 mm, particularly preferably at least 1,0 mm, and/or
- having different grain sizes, wherein the smallest grain size is at least 0,1 mm and the largest grain size is at most 4 mm.

3. The method according to any one of the preceding claims, **characterized in that** in the step of filling the upper filling section (2.1) the filling compound (4.1) contains lightweight filler
- having an average grain size of at most 1,0 mm, preferably at most 0,8 mm, particularly preferably at most 0,5 mm, and/or
- having different grain sizes, wherein the smallest grain size is at least 0,1 mm and the largest grain size is at most 2 mm.

4. The method according to any one of the preceding claims, **characterized in that** during filling, the fill level in the lower filling section (2.2) lies in a range of 10 to 50 mm, preferably in a range of 12 to 35 mm, particularly preferably in a range of 15 to 25 mm, and/or the fill level in the upper filling section (2.1) lies in a range of 3 to 30 mm, preferably in a range of 4 to 20 mm, particularly preferably in a range of 5 to 10 mm.

5. The method according to any one of the preceding claims, **characterized in that** in order to produce the filling compound (4.1, 4.2), the lightweight filler is mixed with cement or plastic as binder.

6. The method according to any one of the preceding claims, **characterized in that** after curing of the binder, the mould (2) is completely removed from the filling compound (4.1, 4.2).

7. The method according to any one of claims 1 to 5,
**characterized in that** after curing, the mould (2) remains at least partially, preferably completely, connected to the filling compound (4.1, 4.2) and together with the filling compound (4.1, 4.2) forms the air-conditioning floorplate (1), wherein a plastic film (5), in particular a plastic film (5) obtained by deep-drawing, which forms the lower filling section (2.2), in particular the lower filling section (2.2) and the upper filling section (2.1), is used in particular as mould (2) or the part of the mould (2) which together with the filling compound (4.1, 4.2) forms the air-conditioning floorplate (1).

8. Air-conditioning floorplate (1), in particular produced by a method according to any one of claims 1 to 7,
- comprising a lower plate-shaped section (1.1) and
- comprising an upper section (1.2) which adjoins this in the vertical direction and which is connected thereto, which is formed by at least one projection (1.21),
wherein the lower section (1.1) and the upper section (1.2) is formed by a cured filling compound (4.1, 4.2) which contains lightweight filler and binder,
**characterized in that** the average grain size in the lower section (1.1) is smaller than in the upper section (1.2).

9. The air-conditioning floorplate (1) according to claim 8, **characterized in that** the fraction of lightweight filler in the total cured filling compound (4.1, 4.2) is more than 30 wt.%, preferably more than 35 wt.%, particularly preferably more than 40 wt.%, and/or more than 60 vol.%, preferably more than 70 vol.%, particularly preferably more than 80 vol.%.

10. The air-conditioning floorplate (1) according to any one of claims 8 or 9, **characterized in that** the upper section (1.2) is covered by a plastic film (5) at least in section, which in particular surrounds the at least one projection (1.21) in an annular or cup shape and/or lines a groove (6) formed between two adjacent projections (1.21).

## Revendications

1. Procédé de fabrication d'une plaque de fond climatisée (1), dans lequelle les étapes suivantes sont exécutées :
- prévision d'un moule (2) comportant une section de remplissage supérieure (2.1) et une section de remplissage inférieure (2.2) adjacente à celle-ci dans le sens vertical et qui est constituée par au moins un creux (3),
- remplissage de la section de remplissage inférieure (2.2) avec une masse de remplissage (4.2) contenant une matière de remplissage légère et du liant,
- remplissage de la section de remplissage supérieure (2.1) avec une masse de remplissage (4.1) contenant une matière de remplissage légère et du liant, la masse de remplissage (4.2) se raccordant dans la section de remplissage inférieure (2.2) à la masse de remplissage (4.1) de la section de remplissage supérieure (2.1),
- durcissement du liant,
**caractérisé en ce que**, lors de l'étape de remplissage de la section de remplissage supérieure (2.1), la masse de remplissage (4.1) contient de la matière de remplissage légère ayant une granulométrie moyenne qui est inférieure à la granulométrie moyenne de la matière de remplissage utilisée dans la section de remplissage inférieure (2.2).

2. Procédé selon la revendication 1, **caractérisé en ce que**, lors de l'étape de remplissage de la section de remplissage inférieure (2.2), la masse de remplissage (4.2) contient de la matière de remplissage légère
- ayant une granulométrie moyenne d'au moins 0,5 mm, de préférence d'au moins 0,8 mm, très préférentiellement d'au moins 1,0 mm, et/ou
- ayant différentes granulométries, la plus petite granulométrie s'élevant à au moins 0,1 mm et la plus grande granulométrie s'élevant au maximum à 4 mm.

3. Procédé selon une des revendications précédentes,
**caractérisé en ce que**, lors de l'étape de remplissage de la section de remplissage supérieure (2.1), la masse de remplissage (4.2) contient de la matière de remplissage légère
- ayant une granulométrie moyenne d'au maximum 1,0 mm, de préférence d'au maximum 0,8 mm, très préférentiellement d'au maximum 0,5 mm, et/ou
- ayant différentes granulométries, la plus petite granulométrie s'élevant à au moins 0,1 mm et la plus grande granulométrie s'élevant au maximum à 2 mm.

4. Procédé selon une des revendications précédentes,
**caractérisé en ce que**, lors du remplissage, la hauteur de remplissage dans la section de remplissage inférieure (2.2) est de l'ordre de 10 à 50 mm, de préférence de l'ordre de 12 à 35 mm, très préférentiellement de l'ordre de 15 à 25 mm, et/ou la hauteur de remplissage dans la section de remplissage supérieure (2.1) est de l'ordre de 3 à 30 mm, de préférence de l'ordre de 4 à 20 mm, très préférentiellement de l'ordre de 5 à 10 mm.

5. Procédé selon une des revendications précédentes,
**caractérisé en ce que**, pour créer la masse de remplissage (4.1, 4.2), la matière de remplissage légère est mélangée avec du ciment ou de la matière plastique servant de liant.

6. Procédé selon une des revendications précédentes,
**caractérisé en ce que** le moule (2) est retiré complètement de la masse de remplissage (4.1, 4.2) après le durcissement du liant.

7. Procédé selon une des revendications 1 à 5,
**caractérisé en ce que** le moule (2), après le durcissement du liant, reste du moins partiellement, de préférence complètement, raccordé à la masse de remplissage (4.1, 4.2) et forme avec la masse de remplissage (4.1, 4.2) la plaque de fond climatisée (1), sachant qu'on utilise en particulier comme moule (2) et/ou comme partie du moule (2), qui forme avec la masse de remplissage (4.1, 4.2) la plaque de fond climatisée (1), un film de matière plastique (5), en particulier un film de matière plastique (5) obtenu par emboutissage (2.2) qui constitue la section de remplissage inférieure, en particulier la section de remplissage inférieure (2.2) et la section de remplissage supérieure (2.1).

8. Plaque de fond climatisée (1), en particulier fabriquée selon une des revendications 1 à 7,
- comportant une section inférieure en forme de plaque (1.1) et
- une section supérieure qui lui est adjacente dans le sens vertical, lui est reliée (1.2) et est constituée d'au moins une saillie (1.21),
la section inférieure (1.1) et la section supérieure (1.2) étant constituées d'une masse de remplissage durcie (4.1, 4.2) qui contient de la matière de remplissage légère et du liant,
**caractérisé en ce que** la granulométrie moyenne de la section de remplissage inférieure (1.1) est inférieure à celle de la section supérieure (1.2).

9. Plaque de fond climatisée (1) selon la revendication 8, **caractérisé en ce que** la proportion de matière de remplissage légère sur l'ensemble de la masse de remplissage durcie (4.1, 4.2) s'élève à plus de 30 % en poids, de préférence plus de 35 % en poids, très préférentiellement plus de 40 % en poids, et/ou plus de 60 % en volume, de préférence plus de 70 % en volume, très préférentiellement plus de 80 % en volume.

10. Plaque de fond climatisée (1) selon une des revendications 8 ou 9, **caractérisé en ce que** la section supérieure (1.2) est recouverte du moins par sections d'un film de matière plastique (5) qui entoure en particulier l'au moins une saillie (1.21) à la manière d'un anneau ou d'une ventouse et/ou revêt une rainure (6) réalisée entre deux saillies voisines (1.21).
